# Europäisches Patentamt
## European Patent Office
## Office européen des brevets

(11) Veröffentlichungsnummer: **0 086 354**
**B1**

(12) **EUROPÄISCHE PATENTSCHRIFT**

(45) Veröffentlichungstag der Patentschrift:
17.04.85

(21) Anmeldenummer: 83100585.5

(22) Anmeldetag: **24.01.83**

(51) Int. Cl.⁴: **C 09 D 17/00**, C 09 D 7/00,
C 09 B 67/00, C 14 C 11/00

(54) **Präparationen und ihre Verwendung zum Pigmentieren und/oder Mattieren von Zurichtmitteln für Leder und Lederimitate.**

(30) Priorität: **04.02.82 DE 3203817**

(43) Veröffentlichungstag der Anmeldung:
**24.08.83 Patentblatt 83/34**

(45) Bekanntmachung des Hinweises auf die Patenterteilung:
**17.04.85 Patentblatt 85/16**

(84) Benannte Vertragsstaaten:
**CH DE FR GB IT LI NL**

(56) Entgegenhaltungen:
**FR - A - 1 540 020
FR - A - 2 179 115
US - A - 3 532 662**

(73) Patentinhaber: **BAYER AG, Konzernverwaltung RP Patentabteilung, D-5090 Leverkusen 1 Bayerwerk (DE)**

(72) Erfinder: **Kolb, Günter, Dr., verstorben (DE)**
Erfinder: **Tork, Leo, Dr., Karl-Krekeler-Strasse 11, D-5090 Leverkusen (DE)**
Erfinder: **Höhne, Wolfgang, Grosser Busch 81, D-5060 Bergisch Gladbach (DE)**

## Beschreibung

Die Erfindung betrifft neue Präparationen von Pigmenten und/oder Mattierungsmitteln und ihre Verwendung zum Pigmentieren und/oder Mattieren von Zurichtmitteln für Leder und Lederimitate. Diese Zurichtmittel können in Form wäßriger Lösungen, wäßriger Dispersionen oder auch in Lösemitteln, die mit Wasser mischbar sind, vorliegen.

Es ist bekannt, Zurichtmittel für Leder oder Lederimitate mit Pigmentpräparationen einzufärben. Diese Zurichtmittel können auf Basis von Kasein, Polyacrylaten, Butadienpolymerisaten oder Polyurethanen aufgebaut sein. Die Pigmentpräparationen enthalten neben Pigmenten und üblichen Formierungszusätzen zum Dispergieren der Pigmente und Stabilisieren der Pigmentpräparationen entweder nicht filmbildende Emulgatoren oder filmbildende Bindemittel wie Kasein, Vinylpyrrolidon-Vinylacetat-Copolymere oder Carboxylgruppen-haltige Polymere. Für spezielle Anwendungen können auch Mischungen von Emulgatoren und filmbildenden Bindemitteln mit Schutzkolloidwirkung eingesetzt werden. Solche Pigmentpräparationen beeinflussen die Eigenschaften der Zurichtmittel für Leder und die Eigenschaften der Fertigartikel nachteilig. Verwendet man zum Dispergieren der Pigmente Emulgatoren, kann man zwar hochkonzentrierte Pigmentpräparationen herstellen, nachteilig ist jedoch, daß Emulgatoren durch die Lederzurichtung migrieren. Die Fertigartikel werden im Griff klebrig und neigen zum Zusammenkleben. Die Echtheiten der Leder, wie z. B. Naß und Trockenreibechtheit, die Naßknickung und Naßhaftung werden verschlechtert, und die Bügel- und Prägbarkeit werden ungünstig beeinflußt. Außerdem werden Appreturen unkontrolliert weich gestellt. Leder, welche hydrophobe Eigenschaften haben sollen oder Leder, welche bei starker Benetzung der Narbenschicht unschön anquellen, können mit solchen Pigmentpräparationen nicht zugerichtet werden. Außerdem neigen solche Pigmentpräparationen beim Lagern zum Absetzen der Pigmente unter Bildung eines festen, nicht aufrührbaren Bodensatzes. Verwendet man zum Dispergieren der Pigmente filmbildende Bindemittel, so werden die Zurichtmittel im allgemeinen härter gestellt. Sie belasten die Narbenschicht und geben einen splissigen Narbenwurf und eine schlechte Narbenzeichnung. Verschlechtert werden außerdem die Naßreibechtheiten, die Knickfestigkeit, die Kältefestigkeit und die Naßhaftung. Mit diesen Pigmentbindemitteln können keine hochkonzentrierten Pigmentpräparationen hergestellt werden, weil zum Dispergieren der Pigmente große Mengen Bindemittel erforderlich sind, und weil sowohl Kasein als auch die genannten Copolymeren stark viskositätserhöhend wirken. Schon geringe Mengen dieser relativ niederkonzentrierten Pigmentdispersionen erhöhen die Viskosität der anwendungsfertigen Zurichtflotte deutlich. Dadurch resultieren schlechte Naßhaftungen und schlechte Naßknickungen der Zurichtschichten. Diese Nachteile können nur verhindert werden, wenn man die Viskosität der Flotten durch Verdünnen mit Wasser erniedrigt und damit eine Erniedrigung des Feststoffgehaltes herbeiführt. Damit ist aber gleichzeitig auch eine Erhöhung der Farbaufträge für einen vergleichbaren Zuricheffekt verbunden. Bei Verwendung von Kasein als Pigmentbindemittel können die Naßechtheiten auch dadurch verbessert werden, daß man nach jedem Farbauftrag die einzelnen Zurichtschichten mit Formaldehyd fixiert. Dies führt zu einem weiteren Verfahrensschritt, zu einer Versprödung der Zurichtung und ist physiologisch und ökologisch nicht unbedenklich.

Weichmacher, die zur Verminderung der beschriebenen Verhärtung zugesetzt werden können, z. B. Türkischrotöle, Polyglykole und Caprolactam migrieren und stellen ebenso wie Emulgatoren die Zurichtungsmittel und die Fertigartikel unkontrollierbar weich und klebrig.

Auch eine Kombination von Emulgatoren und filmbildenden Bindemitteln behebt die aufgezeigten Mängel nicht. In jedem Fall bestimmen die erforderlichen hohen Mengen an Bindemittel den Charakter der Zurichtung entscheidend, so daß es notwendig ist, für jede Zurichtung eine genau nach Art und Menge abgestimmte Pigmentpräparation einzusetzen.

Häufig strebt man an, die Lederzurichtungen zur Verbesserung der Echtheitseigenschaften mit geeigneten Mitteln nachträglich zu vernetzen. Da eine solche Vernetzung der Molekülketten häufig in schwach saurem Medium erfolgt, sollen die eingesetzten Pigmentpräparationen nicht nur alkalisch, sondern auch in schwach saurem Medium einsetzbar sein.

Es bestand daher das Bedürfnis nach lagerstabilen, hochkonzentrierten Pigmentpräparationen, die universell in schwach saurem und alkalischem Milieu in Wasser oder in mit Wasser mischbaren organischen Lösemitteln einsetzbar sind. Sie sollen ein gutes Fließverhalten zeigen, leicht verarbeitbar sein und mit geringem technischem Aufwand hergestellt werden können. Außerdem sollen diese Pigmentpräparationen geringe Bindemittelmengen enthalten und die Nachteile der bekannten Bindemittel nicht aufweisen.

Die vorliegende Erfindung betrifft Präparationen enthaltende Pigmente und/oder Mattierungsmittel, die Lösung eines Pigmentbindemittels und gegebenenfalls Zusätze, dadurch gekennzeichnet, daß das Pigmentbindemittel ein Copolymeres ist aus, bezogen auf das Gewicht des Copolymeren, 10—40 Gew.-% eines Acrylsäureesters mit 1—12 C-Atomen in der Alkoholkette, 10—40 Gew.-% eines Methacrylsäureesters mit 1—4 C-Atomen in der Alkoholkette, 10—30 Gew.-% N-Vinylpyrrolidon, 5—15 Gew.-% Acrylsäure und 10—20 Gew.-% eines Vinylesters mit 1—4 C-Atomen in der Säurekette und dieses in einem mit Wasser mischbaren organischen Lösemittel in Gegenwart eines Reglers und einer Perverbindung oder einer bei der Polymerisationstemperatur radikalspendenden Azoverbindung hergestellt worden ist. Vorzugsweise werden bei der Herstellung des Copolymeren 0,2—2,5 Gew.-% Regler und 0,3—5 Gew.-% Perverbindung oder radikalspendende Azoverbindung eingesetzt.

Als Perverbindungen können beispielsweise Diacylperoxide, Perester oder Perketone Verwendung finden; als radikalspendende Azoverbindung beispielsweise Azodiisobuttersäuredinitril.

Als Regler setzt man vorzugsweise Schwefelverbindungen wie Mercaptoethanol, Dodecylmercaptan oder tert.-Dodecylmercaptan ein. Als Acrylsäureester mit 1—12 C-Atomen in der Alkoholkette seien beispielsweise genannt: Acrylsäuremethylester, Acrylsäureethylester, Acrylsäureisopropylester, Acrylsäure-tert.-butylester, Acrylsäure-n-butylester.

Als Methacrylsäureester mit 1—4 C-Atomen in der Alkoholkette seien beispielhaft genannt:

Methacrylsäuremethylester, Methacrylsäureethylester, Methacrylsäureisopropylester. Als Vinylester mit 1—4 C-Atomen in der Säurekomponente kommen beispielsweise Vinylacetat oder Vinylpropionat in Frage.

Bevorzugte Copolymere haben eine Grenzviskosität $[\eta]$ von 0,05—0,35 und werden beispielsweise hergestellt in Ethylenglykol, Methyl- oder Ethylglykol oder deren Acetaten oder in Gemischen aus diesen. Die Copolymeren können als solche in organischen Medien eingesetzt werden, werden jedoch bevorzugt in Form ihrer wäßrig-alkalischen oder auch neutralen oder schwach sauren Lösung verwendet.

Die neuen Präparationen können außerdem noch Zusätze wie Stellmittel und Verdicker enthalten. Sie lassen sich im Gegensatz zu herkömmlichen Präparationen in einfacher Weise durch Dispergieren der Komponenten in einem Naßzerkleinerungsapparat, beispielsweise in einer Rotor-Statormühle, einer Perlmühle oder einer Kugelmühle in kürzester Zeit herstellen. Die Teilchengröße liegt bei ca. 0,2—2 µm.

Die Pigmente, die in den erfindungsgemäßen Pigmentpräparationen eingearbeitet sind, unterliegen praktisch keiner Beschränkung, sie können anorganischer oder organischer Natur sein. Geeignete organische Pigmente sind z. B. solche der Azo-, Anthrachinon-, Azoporphin-, Thioindigo-, Dioxazin-, Naphthalintetracarbonsäure- oder Perylentetracarbonsäurereihe sowie verlackte Farbstoffe wie Ca-, Mg- oder Al-Lacke von Sulfonsäure- und/oder Carbonsäuregruppen enthaltenden Farbstoffen, von denen eine große Zahl beispielsweise aus Colour-Index, 2. Auflage, bekannt sind. Geeignete anorganische Pigmente oder Mattierungsmittel sind z. B. Zinksulfide, Titandioxide, Ultramarin, Eisenoxide, Nickel- und Chromverbindungen, Ruß und Siliciumdioxide oder Aluminiumoxide.

Wäßrige Lederzurichtungen, die mit den erfindungsgemäßen Pigmentpräparationen eingefärbt werden können, sind beispielsweise in Ullmanns Encyklopädie der technischen Chemie, 4. Aufl., Band 16, S. 161—163, beschrieben.

Es lassen sich praktisch alle Zurichtmittel für Leder oder Lederimitate auf Acrylat-, Butadien-, Vinylchlorid- oder Polyurethanbasis, die meist als wäßrige Dispersionen vorliegen, mit den erfindungsgemäßen Pigmentpräparationen pigmentieren.

Die Auswahl der Pigmente erfolgt nach dem gewünschten Farbeffekt. Wünscht man hohe Deckkraft, so werden vorzugsweise Präparationen anorganischer Pigmente eingesetzt. Soll das behandelte Substrat dagegen einen lasierenden Farbton mit hoher Brillanz zeigen, verwendet man vorzugsweise Präparationen mit organischen Pigmenten. Außerdem berücksichtigt man für einen gezielten Einsatz die vom Pigment vorgegebenen Echtheiten, wie Licht- und Migierechtheit sowie Hitzebeständigkeit. Strebt man mehr oder weniger mattierte Zurichtschichten an, setzt man Mattierungspasten z. B. auf Basis von Siliciumdioxid oder Aluminiumoxid ein.

Die erfindungsgemäßen Präparationen haben gegenüber Kaseinfarbpasten den Vorteil, daß sie trotz hoher Pigmentkonzentration gut fließfähig und leicht handhabbar sind, die Zurichtung nicht verhärten und die Naßfestigkeit der Zurichtung nicht verschlechtern. Gegenüber Pigmentanreibungen, die unter Zusatz von Emulgatoren hergestellt wurden, haben sie den Vorteil, daß die mit der Migration von Weichmacher verbundenen Nachteile nicht auftreten, und daß die Pigmentpasten lagerstabil sind, also nicht zum Absetzen eines festen, nicht aufrührbaren Bodensatzes neigen. Gegenüber bekannten filmbildenden Polymerbindemitteln haben sie den Vorteil, daß erheblich geringere Mengen benötigt werden, um denselben Farbeffekt zu erzielen, damit also eine nachteilige Änderung der Eigenschaften der Zurichtmittel vermeiden.

Ein wesentliches Merkmal der Erfindung ist, daß die im wesentlichen für die Dispergier- und Schutzkolloid-Eigenschaften verantwortlichen Komponenten, Acrylsäure und N-Vinylpyrrolidon, in den genannten Verhältnissen kombiniert werden. Dadurch ist es gelungen, höchstkonzentrierte und trotzdem leicht und schnell verarbeitbare Pigmentpasten herzustellen. Es ist auch möglich geworden, diese für vernetzbare Spezialzurichtungen einzusetzen, die einen schwach sauren pH-Wert erfordern. Steigende Echtheitsanforderungen an Zurichtmittel sowie der Trend, möglichst nur mit wäßrigen Flotten zu arbeiten, haben zu pigmentierten Effektfarben mit wäßrigen Bindemitteln auf Basis Kasein-Polymerisatbinder geführt. Solche Effektfarben belasten aber die Narben stark, betonen die Narbenzeichnung zu wenig und sind nicht genügend brillant. Mit den erfindungsgemäßen Pigmentpräparationen lassen sich hochpigmentierte, beliebig mit Wasser verdünnbare Zurichtmittel herstellen. Es gelingt mit ihnen erstmalig bei Lederzurichtungen das Narbenkorn scharf hervorzuheben und dabei den Narben nicht zu belasten.

Die erfindungsgemäßen Präparationen von Pigmenten und/oder Mattierungsmitteln vereinigen damit die Vorteile der bekannten Präparationen, ohne deren Nachteile aufzuweisen.

Durch die Tatsache, daß es möglich ist, auf diesem Wege hochkonzentrierte Pasten herzustellen, die noch leicht handhabbar sind, ist es auch möglich geworden, in den anwendungstechnischen Eigenschaften stark divergierende Zurichtungstypen einzufärben, ohne deren Charakter und physikalischen Echtheiten zu verschlechtern. Der weite Bogen reicht hier von harten, nicht thermoplastischen Glanzstoßzurichtungen bis zu extrem elastischen Zurichtungen für Millnappa.

Beispiel 1

In einem Rührkessel aus V4A-Stahl werden 17,5 kg Glykolmonoethylether und 17,5 kg Ethylenglykol vorgelegt, der Kessel durch Spülen mit Reinstickstoff luftfrei gemacht und unter Rühren auf 90°C angeheizt. Bei dieser Temperatur pumpt man eine Mischung aus 8,75 kg Acrylsäureethylester, 10,5 kg Methacrylsäuremethylester, 7 kg N-Vinylpyrrolidon, 3,5 kg Acrylsäure, 5,25 kg Vinylacetat, 0,35 kg 2-Mercaptoethanol und 0,7 kg Azodiisobuttersäuredinitril im Verlauf von 4 Stunden ein. Man rührt noch 2 Stunden bei 90°C nach und erhält 70 kg einer 50%igen Polymerlösung, die als Pigmentbindemittel wie folgt weiter verarbeitet wird:

5 kg des Pigmentbindemittels werden mit 15,6 kg Wasser, 3 kg Ethylenglykol, 1 kg 2-Phosphono-butan-tricarbonsäure-1,2,4 und 1,5 kg Ammoniak (techn. 25%ig) vorgelegt.

Nach kurzem Rühren werden 65 kg Titandioxidpigment (BAYERTITAN R-KB-4, Fa. Bayer), 0,2 kg pyrogene Kieselsäure (Aerosil 380, Fa. Degussa) und 0,05 kg eines handelsüblichen Konservierungsmittels (Proxel GXL, Fa. ICI) eingetragen und 15 Minuten mittels eines Dissolvers bei 200 U/Min. gerührt. Anschließend wird mit 8,35 kg Wasser verdünnt und mit 0,4 kg Tri-n-butylphosphat bei 800 U/Min. entschäumt. Die fertige Pigmentpaste ist gut dispergiert, fließfähig und lagerstabil; pH-Wert 9—9,5.

Aus der Pigmentzubereitung kann man wie folgt weiß pigmentierte Polymerisatbinder-Farben, die für die Lederzurichtung eingesetzt werden, herstellen:

a)  Pigmentierung von nichtreaktiven, wäßrigen Polyacrylat- und Polybutadiendispersionen.

200 g der Pigmentpräparation werden nach Verdünnen mit 400 g Wasser mit 250 g eines 40%igen Polyacrylatbinders, hergestellt nach DE-AS 1 278 064, Beispiel 1, und 150 g eines 35%igen Polybutadienbinders, hergestellt nach DE-P 1 174 937, Beispiel 2, versetzt. Nach gutem Vermischen erhält man eine stark deckende, weiße Polymerisatbinder-Farbe, die besonders geeignet ist als Spritzfarbe auf geschliffenen und vollnarbigen Ledern. Will man die Farbe mittels eines Plüschbrettes auftragen, wird die Farbe vorher mit Wasser im Verhältnis 2 : 1 verdünnt.

b)  Pigmentierung von vernetzbaren, wäßrigen Polybutadiendispersionen.

In der DE-OS 2 946 435 wird ein Verfahren zum Zurichten von Leder beschrieben, dadurch gekennzeichnet, daß bei der Lederzurichtung nicht auspolymerisierte Kautschuklatices mit den Oxiden und/oder Hydroxiden zweiwertiger Metalle umgesetzt werden. In Beispiel 1 der DE-OS 2 946 435 werden nun zum Pigmentieren anstelle der verwendeten 100 g handelsüblicher Pigmentpaste auf Kaseinbasis 100 g der wie oben erhaltenen erfindungsgemäßen Pigmentpräparation verwendet und anschließend, wie im Beispiel 1 der DE-OS 2 946 435 beschrieben, weiter verfahren. Die erhaltene Zurichtung besitzt die in der DE-OS 2 946 435 angegebenen vorteilhaften Eigenschaften. Darüber hinaus ist sie im Weißton gedeckter, belastet den Narben weniger, ist im Griff deutlich trockener und neigt nicht zum Kleben wie beim Pigmentieren mit kaseinhaltigen Pigmentpasten.

Aus der Pigmentzubereitung kann man wie folgt weiß pigmentierte Polyurethandispersionen, die für die Textilbeschichtung eingesetzt werden, herstellen:

c)  Pigmentierung vernetzbarer, wäßriger Polyurethandispersionen:

Zu 1000 g einer 40%igen aliphatischen vernetzbaren Polyesterurethan-Dispersion, hergestellt nach DE-OS 2 814 173, Beispiel 3, werden nach Zusatz von 10 g 10%iger Essigsäure und 1 g eines Entschäumers (Nopco 8050, Fa. Münzing) unter Rühren mit einem langsam laufenden Gitterrührer 100 g der Titandioxid-Pigmentzubereitung und dann 20 g einer 50%igen wäßrigen Lösung eines partiell veretherten Melamin-Formaldehyd-Vorkondensates gegeben. Anschließend erfolgt in einem Evakuierungs-Rührwerk die Zugabe von 17 g eines Copolymerisates aus Vinylpyrrolidon und Vinylacetat zum Einstellen auf Streichviskosität. Nach einer Rührzeit von 5 Minuten erhält man eine feinverteilte, stabile Pigmentdispersion, die für die Beschichtung von Textilien nach dem Umkehr- oder Direktverfahren geeignet ist. Die Paste hat den pH-Wert 6 und eine Viskosität von 4300 mPa·s. Die mit der Pigmentdispersion nach bekannten Verfahren hergestellten Polyurethanfilme sind gleichmäßig und stippenfrei gefärbt. Die Vernetzung erfolgt nach dem letzten Strich bei einer Hitzebehandlung der beschichteten und getrockneten Ware während 90 Sekunden bei 150° C.

Beispiel 2

Wie in Beispiel 1 beschrieben, setzt man folgende Monomermischung ein: 9,625 kg Acrylsäureisopropylester, 9,625 kg Methacrylsäuremethylester, 5,25 kg N-Vinylpyrrolidon, 4,375 kg Acrylsäure und 6,125 kg Vinylacetat.

20 kg dieses Pigmentbindemittels werden mit 30 kg Wasser, 5 kg Ethylenglykol und 3 kg Monoaminoethanol vorgelegt. Nach kurzem Rühren werden 16 kg Ruß mit der Teilchengröße 18 mμ und dem Nigrometerindex 74 (Monach 800, Fa. Cabot) und 0,05 kg Konservierungsmittel (Proxel GXL, Fa. ICI) eingetragen und 15 Minuten mittels eines Dissolvers bei 2000 U/Min. gerührt. Anschließend wird die Rußdispersion auf einer Perlmühle mit Glasperlen von 1 mm Durchmesser bis zur Erzielung der erforderlichen Schwarztiefe und Deckung unter Kühlung 1—2mal abgemahlen. In einem Rührkessel wird dann mit 25,55 kg Wasser verdünnt und mit 0,4 kg Tri-n-butylphosphat entschäumt. Die fertige Pigmentpaste ist gut dispergiert, fließfähig und lagerstabil; pH-Wert 10—10,5.

Aus der Pigmentzubereitung kann man wie folgt schwarz pigmentierte Polymerisatbinder-Farben, die für die Lederzurichtung eingesetzt werden, herstellen:

a) Pigmentierung von vernetzbaren, wäßrigen Polyacrylat- und Polybutadiendispersionen.

100 g der Rußzubereitung werden mit 40 g einer üblichen Wachs-Öl-Emulsion und 15 g handelsüblichen Polyepoxidharzes (LEKUTHERM X 20, Fa. Bayer) als Vernetzer gut miteinander verrührt und dann mit 445 g Wasser verdünnt. Anschließend werden 250 g eines 40%igen Carboxylgruppen-haltigen Copolymerisates auf Acrylatbasis mit der Filmhärte °Shore A 45 und 150 g eines 35%igen Carboxylgruppen-haltigen Copolymerisates auf Butadienbasis mit der Filmhärte °Shore A 63 zugesetzt. Nach gutem Vermischen erhält man eine stark deckende schwarze Polymerisatbinder-Farbe, die sehr gut verläuft und besonders geeignet ist für die Zurichtung von geschliffenen Ledern. Erfolgt der Farbauftrag mit der Luftspritzpistole, wird die Farbe in vorliegender Form verwendet; will man mittels Plüschens die Farbe auftragen, wird die Farbflotte vorher mit Wasser im Verhältnis 2 : 1 verdünnt, soll der Farbauftrag mit der Gießmaschine oder der Airlesspistole erfolgen, wird die Flotte mit einem geeigneten Verdickungsmittel (EUKANOL Paste M, Fa. Bayer) auf eine Viskosität gestellt, die einer Auslaufzeit von 16—20 Sek. im Fordbecher mit einer 4-mm-Düse entspricht. Die erhaltene Zurichtung besitzt eine hervorragende Schwarztiefe und sehr gute physikalische Echtheiten, insbesondere sehr gute Naß- und Trockenreibechtheiten, -knickungen und -haftungen.

Die Rußzubereitung ist auch sehr gut geeignet für die Pigmentierung von wäßrigen Kaseinlösungen, die für die Lederglanzstoßzurichtung eingesetzt werden:

b) Pigmentierung von wäßrigen Kaseinlösungen.

25 g der Rußzubereitung werden mit 5 g Türkischrotöl und 200 g einer für die Glanzstoßzurichtung geeigneten, handelsüblichen 15%igen Kaseinlösung miteinander verrührt und mit 670 g Wasser verdünnt. Anschließend werden 100 g einer 5%igen wäßrigen Lösung eines schwarzen Säurefarbstoffs, Acid Black 2, eingerührt. Die fertige Kaseinfarbe ist besonders geeignet für die Zurichtung von chromgegerbtem Ziegenoberleder, die man wie folgt vornimmt:
2 Plüschaufträge, trocknen, glanzstoßen, 1 Plüschauftrag, fixieren mit 10%iger wäßriger Formaldehydlösung, glanzstoßen, schlußbügeln auf der Finiflex-Durchlaufbügelmaschine mit 130—150°C heißer Walze. Die zugerichteten Leder sind feinporig und haben einen flachen, anliegenden Narben. Die Zurichtung ist hochglänzend und besitzt ein blumiges, tiefes Schwarz.

Beispiel 3

5 kg Pigmentbindemittel aus Beispiel 1 werden mit 50 kg Wasser, 5 kg Ethylenglykol, 1 kg 2-Phosphono-butan-tricarbonsäure-1,2,4 und 1,5 kg Ammoniak (techn. 25%ig) vorgelegt. Nach kurzem Rühren werden 30 kg gefällte Kieselsäure (BASIKAL KN., Fa. Bayer), 0,3 kg pyrogene Kieselsäure (Aerosil 380, Fa. Degussa) und 0,05 kg Konservierungsmittel (Proxil GXL, Fa. ICI) eingetragen und 15 Minuten mittels eines Dissolvers bei 2000 U/Min. gerührt. Anschließend wird die Mattierungsmittel-Dispersion auf einer Perlmühle mit Glasperlen von 2 mm Durchmesser 1mal unter Kühlung abgemahlen. In einem Rührkessel wird dann mit 6,95 kg Wasser verdünnt und mit 0,2 kg Tri-n-butylphosphat entschäumt. Die fertige Mattierungsmittel-Paste ist fließfähig und lagerstabil. pH-Wert: 9—9,5.

Die Mattierungspaste eignet sich hervorragend zur Herstellung von mehr oder weniger stark mattierten Polymerisatbinder-Farben, die für die Lederzurichtung eingesetzt werden. Werden z. B. in den Beispielen 1—3 in den Polymerisatbinder-Farben zusätzlich oder auch abzüglich oder auch anstelle von den Pigmentzubereitungen 10—30 g Mattierungspaste eingesetzt, erhält man die Lederzurichtungen im eleganten Seidenglanz; wenn dabei über 50 g Mattierungspaste verwendet werden, resultieren stark mattierte Zurichtungen. Alle Lederzurichtungen sind auch bei hohem Angebot der Mattierungspaste glatt und ohne graue Stippen. Hervorragend eignet sich diese Paste auch als Antikleber bei Klebeschwierigkeiten beim Bügeln und Stapeln der Leder.

### Beispiel 4

Es wird folgendes Monomerengemisch, wie in Beispiel 1 beschrieben, zur Polymerisation eingesetzt:

7 kg Acrylsäure-n-butylester, 12,25 kg Methacrylsäuremethylester, 7 kg N-Vinylpyrrolidon, 2,625 kg Acrylsäure und 6,125 kg Vinylacetat. Das erhaltene Pigmentbindemittel wird wie folgt weiter verarbeitet:

5 kg Pigmentbindemittel werden mit 20 kg Wasser, 5 kg Ethylenglykol, 1 kg 2-Phosphonobutan-tricarbonsäure-1,2,4 und 2 kg Ammoniak (techn. 25%ig) vorgelegt. Nach kurzem Rühren werden 55 kg Eisenoxidpigment (BAYFERROX 3910, Fa. Bayer), 0,2 kg pyrogene Kieselsäure (Aerosil 380, Fa. Degussa) und 0,05 kg Konservierungsmittel (Proxel GXL, Fa. ICI) eingetragen und 15 Minuten mittels eines Dissolvers bei 2000 U/Min. gerührt. Anschließend wird die Pigmentdispersion auf einer Perlmühle mit Glasperlen von 1 mm Durchmesser bis zur Erzielung der erforderlichen Farbstärke und Deckung 1—2mal unter Kühlung abgemahlen. In einem Rührkessel wird dann mit 11,35 kg Wasser verdünnt und mit 0,4 kg Tri-n-butylphosphat entschäumt. Die fertige Pigmentpaste ist gut dispergiert, fließfähig und lagerstabil. Der pH-Wert beträgt 9—9,5.

Um Farbpasten gleicher Viskosität mit anderen anorganischen Pigmenten zu erhalten, ist es erforderlich, das Mengenverhältnis Pigment zu Bindemittel zu Wasser und Zusätzen auf das jeweilige Pigment abzustimmen.

### Beispiel 5

35 kg Pigmentbindemittel aus Beispiel 1 werden mit 28 kg Wasser und 5,6 g Ammoniak (techn. 25%ig) vorgelegt. Nach kurzem Rühren werden 21 kg eines Thioindigopigmentes, 1 kg Tri-n-butylphosphat und 0,1 kg Konservierungsmittel (Proxil GXL, Fa. ICI) eingetragen und 15 Minuten mittels eines Dissolvers bei 2000 U/Min. gerührt. Anschließend wird die Pigmentdispersion auf einer Perlmühle mit Glasperlen von 1 mm Durchmesser bis zur Erzielung der erforderlichen Farbstärke 1—2mal unter Kühlung abgemahlen. In einem Rührkessel wird zum Schluß mit 9,3 kg Wasser verdünnt. Die fertige Pigmentpaste ist gut dispergiert, fließfähig und lagerstabil; pH-Wert: 9—9,5.

Gleich gute Pigmentzubereitungen werden erhalten, wenn man statt des Thioindigopigmentes andere organische Pigmente einsetzt. Um Farbpasten gleicher Konsistenz zu erhalten, ist es — wie bei den anorganischen Pigmenten in Beispiel 4 beschrieben — erforderlich, das Mengenverhältnis Pigment zu Bindemittel zu Wasser und Zusätzen auf das jeweilige Pigment abzustimmen.

Diese Pigmentzubereitungen eignen sich hervorragend für die Herstellung von Effektfarben, die für die Lederzurichtung eingesetzt werden. Man geht hierzu wie folgt vor:

50 g Pigmentpasten-Mischung mit der gewünschten Farbnuance und einem mittleren Pigmentgehalt von 20% werden mit 795 g Wasser verdünnt, 200 g eines 40% Polymerisatbinders auf Acrylat-, Butadien- oder Polyurethanbasis und 15 g eines handelsüblichen Copolymerisates aus Butadien und Methacrylsäure eingerührt. Die Effektfarbe stellt man mit 4 g Ammoniak (techn. 25%ig) auf pH 8 und auf eine Viskosität von 50—70 Sekunden Auslaufzeit, gemessen im Fordbecher mit einer 2-mm-Düse. Für eine gute Haftung der Effektfarbe auf der Polymerisatgrundierung ist es wichtig, daß bei der Grundierung und bei der Effektfarbe Polymerisatbinder oder -Mischungen gleichen Typs verwendet werden. Der Farbauftrag erfolgt mit der Luftspritzpistole in 1—3 Maschinendurchgängen. Der erzielte Farbeffekt zeichnet sich dadurch aus, daß das Narbenkorn ebenso scharf gezeichnet wird wie mit organischen Farbstofflösungen und der Narben dabei nicht belastet wird. Bei dem sich anschließenden Appreturauftrag mit Collodiumlack- oder Polyurethanlack-Lösungen besteht nicht die Gefahr, daß Farbe ausschwimmt und der Effekt verschmiert wie bei der Effektgebung mit in Lösungsmitteln zubereiteten Pigmentpasten oder mit organischen Farbstofflösungen.

Für die Pigmentierung von Polymerisatbinder-Farben (siehe Anwendung in Beispielen 1 und 2) oder von wäßrigen Kaseinlösungen (siehe Anwendung in Beispiel 2) werden Zubereitungen aus organischen Pigmenten entweder allein oder in Kombination mit der in Beispiel 1 beschriebenen Titandioxid-Pigmentzubereitung oder mit der Mattierungspaste (Beispiel 3) oder auch mit den anorganischen Pigmentzubereitungen aus Beispiel 4 eingesetzt. Alle Farbpasten sind untereinander ohne Flokkulationserscheinungen gut mischbar; Aufschüttstellen, Farbstreifen oder Farbtonschwankungen bei der Umkehrbeschichtung treten infolgedessen nicht auf. Die mit den Pigmentzubereitungen eingestellten Nuancen sind jederzeit gut reproduzierbar.

### Patentansprüche

1. Pigmentpräparationen, enthaltend Pigmente und/oder Mattierungsmittel, die Lösung eines Pigmentbindemittels und gegebenenfalls Zusätze, dadurch gekennzeichnet, daß das Pigmentbindemittel ein Copolymeres ist aus, bezogen auf das Gewicht des Copolymeren

10—40 Gew.-% eines Acrylsäureesters mit 1—12 C-Atomen in der Alkoholkette, 10—40 Gew.-% eines Methacrylsäureesters mit 1—4 C-Atomen in der Alkoholkette,
10—30 Gew.-% N-Vinylpyrrolidon,
5—15 Gew.-% Acrylsäure und
10—20 Gew.-% eines Vinylesters mit 1—4 C-Atomen in der Säurekette ·

und dieses in einem mit Wasser mischbaren organischen Lösemittel in Gegenwart eines Reglers und einer Perverbindung oder einer bei Polymerisationstemperatur radikalspendenden Azoverbindung hergestellt worden ist.

2. Präparationen gemäß Anspruch 1, dadurch gekennzeichnet, daß das Copolymere in Gegenwart von 0,2—2,5 Gew.-% Regler und 0,3—5 Gew.-% Perverbindung oder radikalspendender Azoverbindung hergestellt worden ist.

3. Verwendung der Präparationen gemäß den Ansprüchen 1 und 2 zum Pigmentieren und/oder Mattieren von Zurichtmitteln für Leder und Lederimitate.

## Claims

1. Pigment formulations containing pigments and/or delustrants, a solution of a pigment binder and, if appropriate, additives, characterised in that the pigment binder is a copolymer of, relative to the weight of the copolymer,

10—40% by weight of an acrylic acid ester having 1—12 C atoms in the alcohol chain,
10—40% by weight of a methacrylic acid ester having 1—4 C atoms in the alcohol chain,
10—30% by weight on N-vinylpyrrolidone,
5—15% by weight of acrylic acid and
10—20% by weight of a vinyl ester having 1—4 C atoms in the acid chain,

and this has been prepared in an organic solvent which is miscible with water in the presence of a regulator and of a per-compound or an azo compound which donates free radicals at the polymerisation temperature.

2. Formulations according to Claim 1, characterised in that the copolymer has been prepared in the presence of 0.2—2.5% by weight of regulator and 0.3—5% by weight of per-compound or an azo compound which donates free radicals.

3. Use of formulations according to Claims 1 and 2, for pigmenting and/or delustring dressing agents for leather and leather imitations.

## Revendications

1. Préparations pigmentaires, contenant des pigments et/ou des agents produisant un effet mat, une solution d'un liant pour pigments et, le cas échéant, des additifs, caractérisées en ce que le liant pour pigments est un copolymère formé, par rapport au poids de copolymère, de

10—40% en poids d'un ester d'acide acrylique ayant 1 à 12 atomes de carbone dans la chaîne alcoolique,
10—40% en poids d'un ester d'acide méthacrylique ayant 1 à 4 atomes de carbone dans la chaîne alcoolique,
10—30% en poids de N-vinylpyrrolidone,
5—15% en poids d'acide acrylique et
10—20% en poids d'un ester vinylique ayant 1 à 4 atomes de carbone dans la chaîne de l'acide

et ce liant a été préparé dans un solvant organique miscible à l'eau en présence d'un régulateur et d'un per-composé ou d'un composé azoïque engendrant des radicaux à la température de polymérisation.

2. Préparations suivant la revendication 1, caractérisées en ce que le copolymère a été préparé en présence de 0,2 à 2,5% en poids de régulateur et de 0,3 à 5% en poids de per-composé ou de composé azoïque engendrant des radicaux.

3. Utilisation des préparations suivant les revendications 1 et 2 pour pigmenter et/ou pour rendre mats des produits de finissage pour cuirs et cuirs d'imitation.